# EUROPEAN PATENT APPLICATION

(11) **EP 3 462 163 A1**
(43) Date of publication of application: **03.04.2019**
(21) Application number: 17210010.9
(22) Date of filing: 22.12.2017
(51) Int. Cl.: G01N 21/552, G01J 3/02

(54) **OPTICAL DEVICE FOR ADAPTING A SPECTROPHOTOMETER FOR THE EXECUTION OF MEASUREMENTS OF SURFACE PLASMON RESONANCE**

(30) Priority: 02.10.2017 IT 201700109902
(71) Applicant: Up-Code S.R.L., 35132 Padova (IT)
(72) Inventor: PERINO, Mauro, 32016 Farra D'Alpago (BL) (IT); PASQUALOTTO, Elisabetta, 35030 Rubano (PD) (IT); DE TONI, Alessandro, 35143 Padova (IT); SCARAMUZZA, Matteo, 37036 San Martino Buon Albergo (VR) (IT)
(74) Representative: Gallo, Luca

(57) **Abstract**

Optical device (1) for adapting a spectrophotometer for the execution of measurements of surface plasmon resonance, such device (1) comprising a support structure (2) intended to be fixed to a spectrophotometer (100) provided with a light source (101) adapted to generate a light beam (3) and detection means (102) adapted to detect said light beam (3).

The optical device (1) also comprises: optical guide means (6), which define an optical path (7) for the light beam (3); polarization means (9) adapted to intercept the light beam (3) in order to polarize it according to a specific polarization component; a plasmonic element (10) provided with a plasmon excitation surface (11) intended to be hit by the light beam (3) and adapted to project the light beam (3) along the optical path (7) in order to direct it towards the detection means (102) of the spectrophotometer (100).

## Description

### Field of application

The present invention regards an optical device for adapting a spectrophotometer for the execution of measurements of surface plasmon resonance.

The present optical device is intended to be advantageously employed in analysis laboratories, in order to enable a spectrophotometer to measure the surface plasmon resonance, in particular in metal/dielectric interface systems, also in the presence of nanostructured interfaces.

In particular, the present optical device allows executing, by means of a spectrophotometer, the measurement of the surface plasmon resonance both with coupling with prism (in particular with Kretschmann configuration) and with coupling with grating.

Advantageously, the present optical device is intended to be employed in analysis laboratories in order to carry out measurements of particular chemical-physical phenomena of interaction between the molecules, such as the adsorption of proteins or DNA on polymers or metals.

The invention is therefore inserted in the context of the industrial field of production of optical/optoelectronic measurement instruments.

### State of the art

As is known, surface plasmon resonance (hereinbelow also indicated with the English acronym SPR) is a physical phenomenon that affects the plasma of electrons of a metallic surface in contact with a dielectric, e.g. air or a liquid.

More in detail, when an electromagnetic wave (e.g. a light beam) hits a metallic surface in conditions of total reflection or of diffraction, there is a collective excitation of the system associated with the oscillations of the electron plasma, termed "surface plasmon resonance" (or "SPR").

The plasmon polaritons, resulting from the coupling between photons and excitons, are electromagnetic waves that are propagated along the interface between the metallic surface and the dielectric. In particular, the plasmon polaritons are associated with evanescent waves, whose electric field is maximum at the interface and exponentially decreases upon moving away from the interface itself, and hence such field is very sensitive to the variations that take place on the metallic surface.

The excitation of the plasmon polaritons occurs by employing plasmonic devices having particular configurations which allow the equivalence of the moments between the propagation constant of the plasmon polaritons and the incident electromagnetic wave. The configurations of known type most diffused in the state of the art are the Kretschmann configuration and the grating configuration.

More in detail, the Kretschmann configuration uses a prism, generally made of glass, to which a thin metal is applied on one of the surfaces thereof. A light beam is made to hit first on the prism and then on the metallic surface.

If the light beam reaches the metallic surface with an incidence angle greater than the critical angle for the total reflection, this gives rise to an evanescent wave which traverses the metallic layer and which can reach the metal/dielectric interface and excite the surface plasmon polaritons.

The grating configuration uses a structure provided with a surface on which nano-grooves are obtained that are periodically repeated, termed grating surface.

In such grating configuration, a light beam is made to directly hit against the grating surface, exciting the plasmon polaritons.

The measurement of the surface plasmon resonance depends on various parameters of the measurement system, such as in particular: the wavelength of the incident light, the incidence angle of the light, the azimuthal angle (only with grating configuration, it is the angle between the light scattering plane and the periodicity vector of the grating surface), and the polarization of the incident light (i.e. the distribution of the electric and magnetic fields that constitute this).

On such matter, the measurement benches of known type employed for carrying out SPR measurements in substance employ optical/optoelectronic systems configured for varying the aforesaid parameters and for acquiring the electromagnetic signal reflected or transmitted by the metal-dielectric interface.

The measurement benches of known type are substantially classifiable in four categories: measurement benches with incidence angle modulation, measurement benches with wavelength modulation, measurement benches with azimuthal angle modulation and measurement benches with polarization modulation.

Such measurement benches are normally made by assembling specific optical and mechanical components, in particular comprising optical instruments such as a helixometer capable of carrying out measurements of wavelength, of incidence angle and of polarization.

The SPR measurement benches of known type briefly described up to now have in practice proven that they do not lack drawbacks.

A first drawback lies in the fact that such SPR measurement benches of known type are very complex and for their use require the use of highly specialized personnel with specific technical-scientific competencies.

A further drawback of the SPR measurement benches of known type lies in the fact that such measurement benches require continuous maintenance.

A further drawback of the SPR measurement benches of known type lies in the fact that they are very costly and therefore not easily available.

### Presentation of the invention

In this situation, the problem underlying the present invention is therefore that of overcoming the drawbacks manifested in the abovementioned solutions of known type, by providing an optical device for adapting a spectrophotometer for the execution of measurements of surface plasmon resonance, which allows carrying out measurements of surface plasmon resonance by using spectrophotometers in particular of conventional type that are already widely diffused in laboratories.

A further object of the present invention is to provide an optical device for adapting a spectrophotometer for the execution of measurements of surface plasmon resonance, which can be easily integrated in existing instruments, in particular not requiring the modification of the control software installed in the spectrophotometer.

A further object of the present invention is to provide an optical device for adapting a spectrophotometer for the execution of measurements of surface plasmon resonance, which allows an installation in the spectrophotometer that is completely reversible, since it does not require modifying the operating principle of the spectrophotometer itself.

A further object of the present invention is to provide an optical device for adapting a spectrophotometer for the execution of measurements of surface plasmon resonance, which is able to amplify the range of analyses executable by a spectrophotometer of known type and amplify the type of samples that can be analyzed and type of target molecules that can be identified.

A further object of the present invention is to provide an optical device for adapting a spectrophotometer for the execution of measurements of surface plasmon resonance, which allows executing SPR measurements on the surface of plasmonic devices for the detection of specific target molecules, for example in the field of explosives or of biological recognition.

A further object of the present invention is to provide an optical device for adapting a spectrophotometer for the execution of measurements of surface plasmon resonance, which is simple to use and install.

A further object of the present invention is to provide an optical device for adapting a spectrophotometer for the execution of measurements of surface plasmon resonance which is structurally simple and inexpensive to achieve.

A further object of the present invention is to provide an optical device for adapting a spectrophotometer for the execution of measurements of surface plasmon resonance which is entirely reliable in operation.

### Brief description of the drawings

The technical characteristics of the invention, according to the aforesaid objects, can be clearly seen in the contents of the below-reported claims and the advantages thereof will be more evident in the following detailed description, made with reference to the enclosed drawings, which represent several merely exemplifying and non-limiting embodiments of the invention, in which:
- figure 1 shows a perspective view of a spectrophotometer in which the optical device, object of the present invention, is intended to be installed;
- figure 2 shows a perspective view of the optical device, object of the present invention, in accordance with a first embodiment and having a first configuration of a plasmonic element of the aforesaid optical device;
- figure 3 shows a perspective view of the optical device, object of the present invention, in accordance with a second embodiment and having the first configuration of the plasmonic element;
- figure 4 shows a planar schematic view of the optical device of figure 2, inserted in a spectrophotometer;
- figure 5 shows a planar schematic view of the optical device of figure 3, inserted in a spectrophotometer, in accordance with a first embodiment variant;
- figure 6 shows a planar schematic view of the optical device of figure 3, inserted in a spectrophotometer, in accordance with a second embodiment variant;
- figure 7 shows a perspective view of the optical device, object of the present invention having a second configuration of the plasmonic element of the aforesaid optical device;
- figure 8 shows a planar schematic view of the optical device of figure 7, inserted in a spectrophotometer;
- figure 9 shows a planar schematic view of the optical device, object of the present invention, in accordance with a third embodiment and having the first configuration of the plasmonic element;
- figure 10 shows a perspective view of the plasmonic element of the optical device, object of the present invention, in accordance with the aforesaid first configuration;
- figure 11 shows a perspective view of the plasmonic element of the optical device, object of the present invention, in accordance with the aforesaid second configuration.

### Detailed description of a preferred embodiment

With reference to the enclosed drawings, reference number 1 overall indicates an optical device for adapting a spectrophotometer for the execution of measurements of surface plasmon resonance, according to the present invention.

The present optical device 1 is intended to be employed for executing measurements of surface plasmon resonance, hereinbelow also indicated with its English acronym SPR. For such purpose, the optical device 1 is intended to be installed in a spectrophotometer 100, for example belonging to a pre-existing instrumentation.

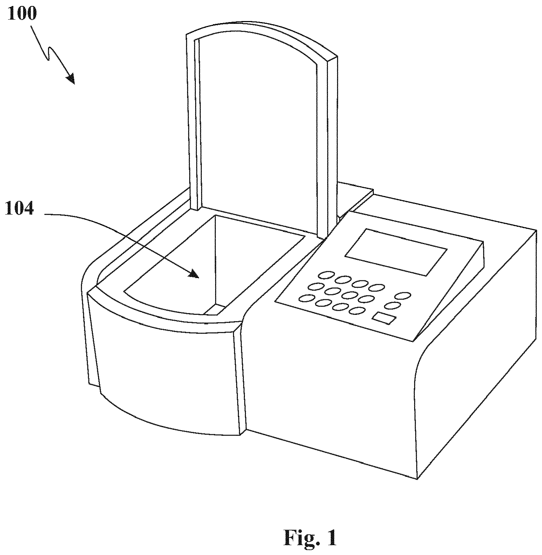

With reference to the example illustrated in figure 1, the spectrophotometer 100 is provided with a housing seat 104 in which, according to the use of known type of the spectrophotometer 100, a series of cuvettes are intended to be inserted which are adapted to contain a sample to be analyzed.

The present optical device 1 is intended to be arranged within the housing seat 104 of the spectrophotometer 100, in particular in place of the aforesaid cuvettes.

The spectrophotometer 100 is provided, in a *per se* known manner, with at least one light source 101, in particular with modulatable wavelength, adapted to generate a light beam 3, which in particular is projected within the housing seat 104 in a manner such to be intercepted by the optical device 1. For example, the light source 101 comprises a lamp (e.g. deuterium gas-discharge lamp or incandescent lamp) adapted to emit the light beam 3, and advantageously a monochromator filter adapted to intercept the light beam 3 in order to filter a specific wavelength of such light beam 3. In particular, the setting of the wavelength of the light beam 3 exiting from the monochromator filter is generally carried out by a user by means of an electronic panel of the spectrophotometer 100.

In particular, in the present patent, by "light beam 3" it is intended any one electromagnetic wave, whose wavelength is in particular comprised in the infrared region, the near-infrared region, the visible region or the ultraviolet region (i.e. any one electromagnetic wave with a wavelength comprised between 1.4 µm and 10 nm).

The spectrophotometer 100 is also provided with detection means 102 adapted to detect the light beam 3 exiting from the optical device 1, in particular in order to detect the intensity of the light beam 3. For example, the detection means 102 comprise one or more optical sensors such as photovoltaic cells, photodiodes, phototubes, photomultipliers.

In particular, the aforesaid detection means 102 are adapted to transform the radiation of the light beam 3 into a measurement signal, in particular electrical.

Advantageously, the spectrophotometer comprises a control unit, in particular provided with microprocessor, adapted to receive the measurement signal coming from the detection means 102 in order to process specific optical parameters, such as the absorbance.

Preferably, the optical device 1 is intended to be fixed to the spectrophotometer 100 in the housing seat 104 between the light source 101 and the detection means 102. According to the idea underlying the present invention, the optical device 1 comprises a support structure 2, intended to be fixed to the spectrophotometer 100, in particular within the housing seat 104 of the latter.

The optical device 1 also comprises optical guide means 6, polarization means 9 and a plasmonic element 10, mounted on the support structure 2 and described in detail hereinbelow.

The optical device 1 is also provided with an inlet zone 4 and an outlet zone 5. At such inlet zone 4, the optical device 1 is adapted to receive the light beam 3 generated by the light source 101 and at the outlet zone 5 the optical device 1 is adapted to project the light beam 3 towards the detection means 102.

The aforesaid optical guide means 6 of the optical device 1 define an optical path 7 between the inlet zone 4 and the outlet zone 5 and are adapted to intercept and to guide the light beam 3 along such optical path 7 from the inlet zone 4 to the outlet zone 5. The aforesaid polarization means 9 are placed to intercept the optical path 7 and are adapted to intercept the light beam 3 in order to polarize it according to at least one polarization component and preferably in order to polarize it in Transverse Magnetic mode TM.

The polarization means 9 for example comprise a polarizing optical filter, configured for orienting the electric field vector (and consequently the magnetic field vector) according to the direction of the polarization component, of *per se* known type and hence not described in detail hereinbelow.

The plasmonic element 10 (on which the excitation of the plasmon polaritons occurs) is arranged between the outlet zone 5 of the optical device 1 (on one side of the optical path 7) and the polarization means 9 (on the other side of the optical path 7).

In addition, the plasmonic element 10 is provided with at least one plasmon excitation surface 11 intended to be hit by the light beam 3 and adapted to project the light beam 3 along the optical path 7 in order to direct it towards the outlet zone 5, and hence towards the detection means 102 of the spectrophotometer 100.

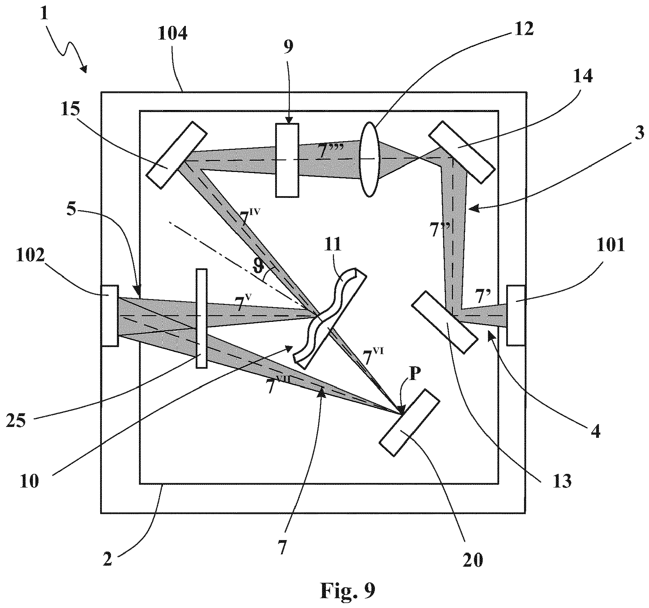

In accordance with the embodiments of the present invention illustrated in the examples of figures 1-8, the optical device 1 is configured in a manner such that the plasmonic element 10 projects the light beam 3 by reflection along the optical path 7, so as to execute the measurements of surface plasmon resonance by using the rays of the light beam 3 reflected from the plasmon excitation surface 11 of the plasmonic element 10. In accordance with one embodiment of the present invention illustrated in the example of figure 9, the optical device 1 is configured in a manner such that the plasmonic element 10 projects, by reflection and by transmission, the light beam 3 along the optical path 7, so as to execute the measurements of surface plasmon resonance also by using the rays of the light beam 3 transmitted through the plasmon excitation surface 11 of the plasmonic element 10, as discussed in detail hereinbelow.

Advantageously, the plasmonic element 10 is provided with at least one microfluidic cell arranged at the plasmon excitation surface 11 and adapted to contain at least one dielectric (in particular in gas or liquid form) adapted to define, with the plasmon excitation surface 11, the interface at which the evanescent electromagnetic waves are developed that associated with the plasmon polaritons.

Preferably, the microfluidic cell of the plasmonic element 10 is provided with one or more inlet and outlet doors advantageously connected to corresponding microfluidic channels of the plasmonic element 10 itself, such channels adapted to convey the dielectric towards and from the microfluidic cell.

In particular, the dielectric is conveyed to and picked up the plasmonic element 10 by means of suitable pumping and movement means, *per se* known by the man skilled in the art.

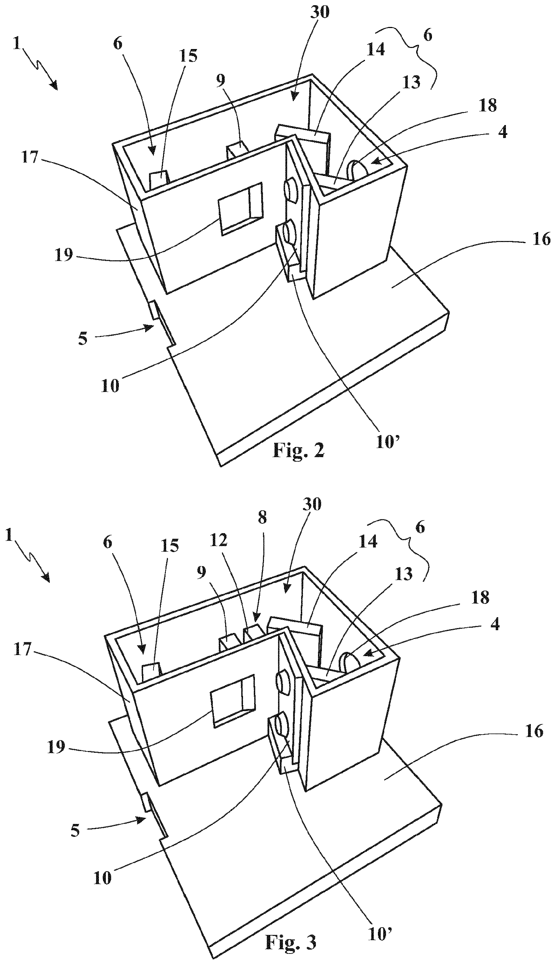

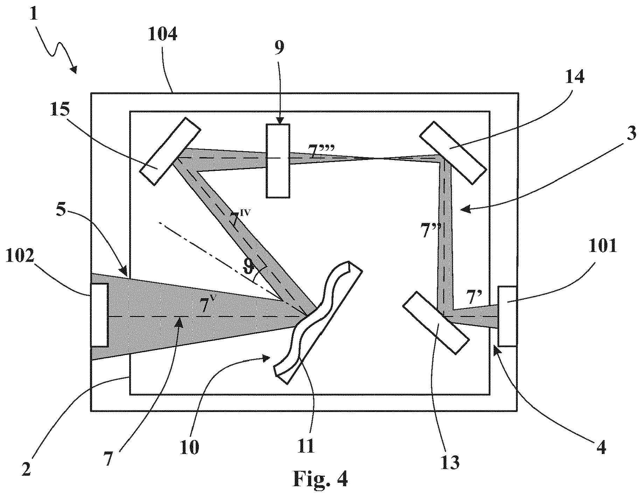

In accordance with a first embodiment of the present invention illustrated in the example of figures 2 and 4, the light beam 3 is not subjected to an operation of focusing within the optical device 1.

Advantageously, in accordance with a second embodiment of the present invention illustrated in figured 3, 5 - 8, the optical device 1 also comprises optical focusing means 8, which are placed to intercept the optical path 7, and are adapted to intercept the light beam 3 in order to reduce the aperture angle of the light beam 3 itself.

Preferably, the optical focusing means 8 comprise a positive lens 12, which is configured for determining the focusing of the light beam 3 and for defining the numerical aperture of the light beam 3 itself, i.e. the angular aperture of the latter. Advantageously, the lens 12 adjusts the aperture angle of the light beam 3 in order to ensure that the latter, after having been projected by the plasmonic element 10, falls entirely within the sensitive surface of the optical sensor of the detection means 102.

In particular, in accordance with the aforesaid first embodiment (illustrated in figures 2 and 4), in which the optical device 1 does not comprise the optical focusing means 8, the light beam 3 at the detection means 102 can affect a greater surface area with respect to the sensitive surface of the detection means 102 which, therefore, only acquire a portion of the light beam 3, i.e. they only acquire a portion of the information relative to the SPR phenomenon.

In accordance with the second embodiment (illustrated in figures 3, 5 - 8), the lens 12 of the optical focusing means 8 advantageously modifies the numerical aperture of the light beam 3 so that the latter, at the detection means 102, affects a smaller surface area, or at most a surface area of size equal to the sensitive surface area of the detection means 102, which thus acquires the entire light beam 3.

Advantageously, the optical focusing means 8 define a specific focal point P of the light beam 3 along the optical path 7.

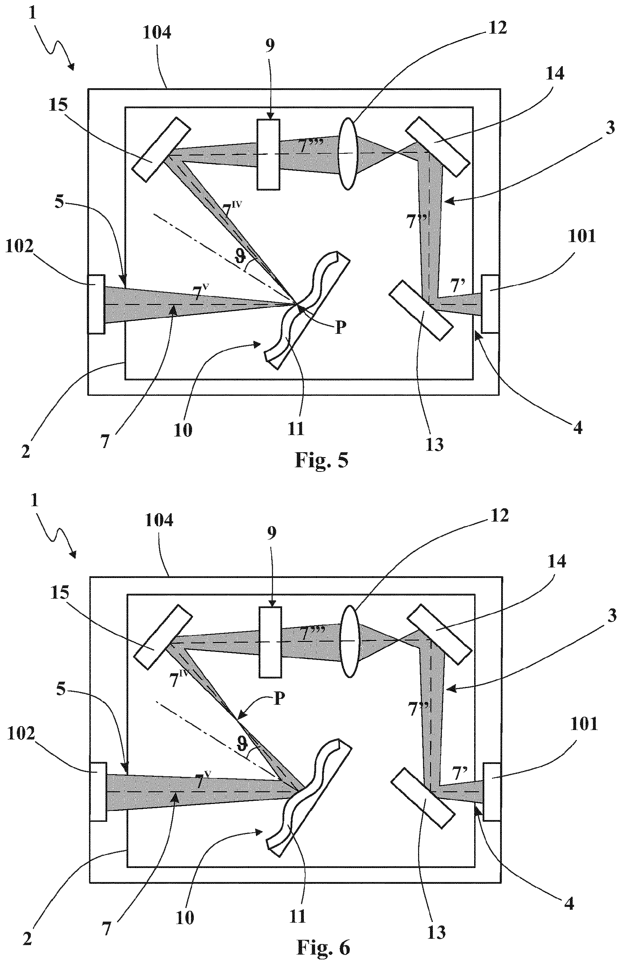

In accordance with a first variant of the second embodiment of the optical device 1 illustrated in the example of figure 5, the focal point P of the light beam 3 is advantageously positioned at the plasmon excitation surface 11 of the plasmonic element 10.

In accordance with a second variant of the second embodiment of the optical device 1 illustrated in the example of figure 6, the focal point P of the light beam 3 is arranged along the optical path 7 spaced from the plasmonic element 10, in particular between the optical guide means 6 and the plasmonic element 10 itself.

Such second variant, with respect to the aforesaid first variant, has the advantage of being less expensive and simpler to make. Indeed, it allows selecting from among a greater variety of lenses 12. Or rather it allows selecting the curvature radii of the lens 12 also based on the standard lenses present on the market, without having to deliberately construct the lens 12 in order to determine the focal point P precisely on the plasmon excitation surface 11. Consequently, such second variant advantageously allows lowering the cost of production of the optical device 1.

In accordance with the embodiments illustrated in the enclosed figures 3, 5 - 8, the polarization means 9 are placed after the lens 12 of the optical focusing means 8, according to the propagation sense of the light beam 3 along the optical path 7. In accordance with different embodiments, nevertheless, the polarization means 9 are positionable before the lens 12.

Advantageously, the plasmonic element 10 of the optical device 1 is arranged with a first configuration corresponding to a grating configuration, or with a second configuration corresponding to a Kretschmann configuration.

In accordance with the embodiments of the present invention illustrated in figures 2-6, the plasmonic element 10 of the optical device is arranged with the first configuration (grating).

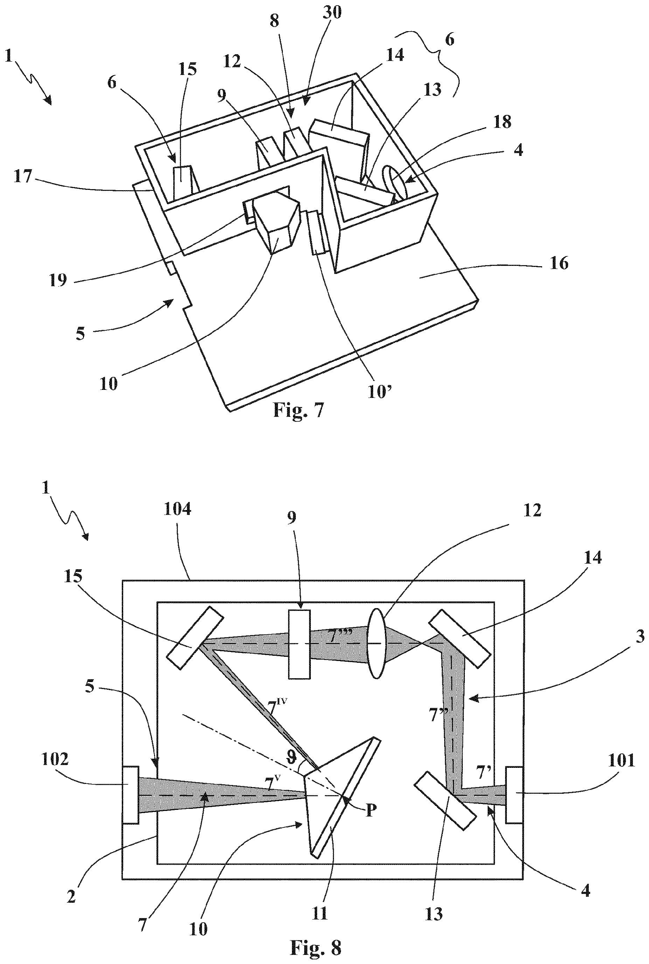

In accordance with the examples illustrated in figures 7 and 8, the plasmonic element 10 of the optical device is arranged with the second configuration (Kretschmann). Of course, the second configuration (Kretschmann) of the plasmonic element 10 can also be employed in embodiments of the optical device 1 that are different from those of figures 7 and 8, for example in the first embodiment of figure 2 or the second variant of figure 6.

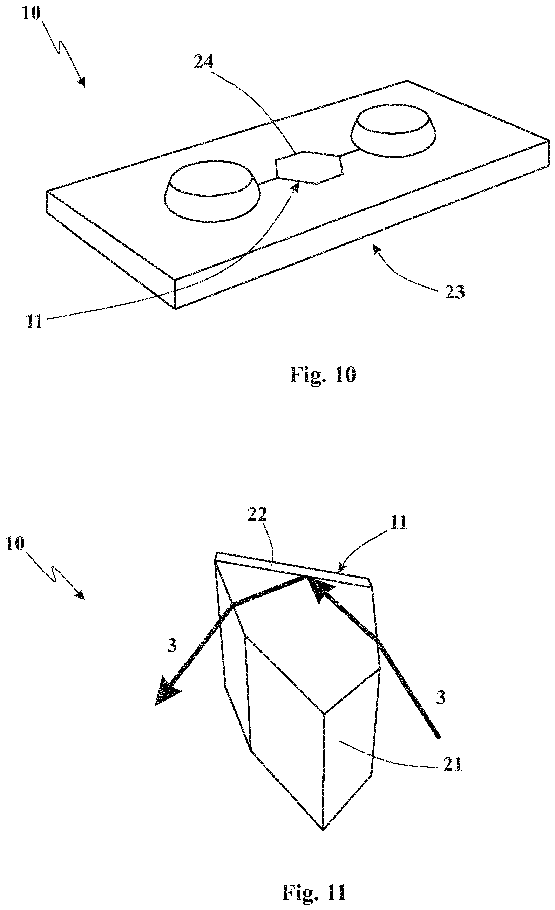

More in detail, the plasmonic element 10 with the aforesaid first configuration (grating), illustrated in detail in the example of figure 10, comprises a metallic grating plate 23. Advantageously, moreover, the plasmon excitation surface 11 is defined by at least one grating surface 24 obtained on the grating plate 23, and periodic nanostructures are obtained on such grating surface 24.

Preferably, the grating plate 23 is also provided microfluidic channels, not illustrated in the enclosed figures, in which a liquid or gaseous dielectric fluid can flow.

In operation, according to the aforesaid first configuration, the light beam 3 is guided by the optical guide means 6 along the optical path 7 until hitting the grating surface 24 of the grating plate 23 with a pre-established incidence angle ϑ, in order to generate the SPR phenomenon at the interface between the grating surface 24 and the dielectric. Subsequently, therefore, the grating surface 24 reflects the light beam 3 along the optical path 7 in order to direct it towards the outlet zone 5 and, therefore, towards the detection means 102 of the spectrophotometer 100.

The plasmonic element 10 with the aforesaid second configuration (Kretshmann), illustrated in detail in the example of figure 11, comprises a prism 21, which is advantageously provided with a high refraction index, for example a prism made of glass with refraction index comprised between 1.5-1.9.

In accordance with the second configuration, the plasmon excitation surface 11 is defined by a metallic layer 22 of the plasmonic element 10, which is deposited on at least one face of the prism 21.

Preferably, the prism 21 is provided with microfluidic channels, not illustrated in the enclosed figures, in which a liquid or gaseous dielectric fluid can flow.

Advantageously, in accordance with a particular embodiment, the plasmonic element 10 comprises multiple metallic layers 22 arranged on corresponding faces of the prism 21, intended for example to be subjected to different dielectrics, to be used for the development of the SPR phenomenon.

In operation, according to the aforesaid second configuration, the light beam 3 is guided by the optical guide means 6 along the optical path 7 until it hits the prism 21 of the plasmonic element 10 and subsequently is propagated within the latter up to reaching the metallic layer 22 with a pre-established incidence angle ϑ, advantageously greater than the critical angle of the metal for the total reflection, in order to generate the SPR phenomenon at the interface between the metallic layer 22 and the dielectric. Then, the plasmon excitation surface 11 of the plasmonic element 10 reflects the light beam 3 which consequently continues its propagation along the optical path 7 towards the outlet zone 5 , and then towards the detection means 102 of the spectrophotometer 100. Advantageously, in accordance in particular with any one of the previously described embodiments, the optical guide means 6 of the optical device 1 comprise one or more reflection elements 13, 14, 15, each of which comprising a corresponding mirror, for example.

Each reflection element 13, 14, 15 is placed to join two successive sections of the optical path 7 that are tilted with respect to each other.

In particular, the optical path 7 comprises multiple sections, preferably rectilinear, tilted one with respect to the next.

Advantageously, the optical guide means 6 comprise a first reflection element 13 placed to connect between a first section 7' of the optical path 7 (passing through the inlet zone 4) and a second section 7" that is tilted with respect to the first section 7'. Advantageously, the optical guide means 6 comprise a second reflection element 14, placed to connect between the second section 7" and a third section 7"' of the optical path 7, and such third section 7"' intercepts the polarization means 9 and is preferably tilted with respect to the second section 7".

Advantageously, the optical guide means 6 comprise a third reflection element 15 positioned along the optical path 7 between the polarization means 9 and the plasmonic element 10. The third reflection element 15 is placed to connect the third section 7"' of the optical path 7 and a fourth section 7^{IV} of the optical path 7, and such fourth section 7^{IV} is tilted with respect to the third section 7"' and is intercepted by the plasmonic element 10, and more in detail is intercepted by the plasmon excitation surface 11.

In accordance with the second embodiment of the present invention, the lens 12 of the focusing means 8 is advantageously positioned along the third section 7"' of the optical path 7, preferably between the polarization means 9 and the third reflection element 15. Advantageously, moreover, the plasmonic element 10 is placed to connect between the fourth section 7^{IV} and a fifth section 7^{V} of the optical path 7, and such fifth section 7^{V} is tilted with respect to the fourth section 7^{IV} and passes through the outlet zone 5 of the optical device 1 in order to project the light beam 3 towards the detection means 102 of the spectrophotometer 100.

Preferably, the inlet zone 4, the outlet zone 5 and the plasmonic element 10 are aligned with each other, in particular along a rectilinear alignment axis.

Advantageously, the second section 7" of the optical path 7 is tilted 90° with respect to the first section 7', which is preferably aligned with the inlet zone 4 according to the aforesaid alignment axis. According to such configuration, the first reflection element 13 is provided with a first flat reflection surface tilted 45° with respect to the first section 7' of the optical path 7.

Preferably, the third section 7"' of the optical path 7 is substantially parallel to the first section 7' and in particular is tilted 90° with respect to the second section 7".

In particular, the second reflection element 14 is provided with a second reflection surface directed towards the lens 12 and/or the polarization means 9, and preferably parallel to the first reflection surface of the first reflection element 13 and tilted 45° with respect to the second section 7" of the optical path 7.

Advantageously, moreover, the first section 7' and the fifth section 7^{V} of the optical path 7 are parallel to each other and in particular aligned according to the aforesaid alignment axis.

Preferably, the third reflecting element 15 is provided with a third reflection surface directed towards the plasmonic element 10 in order to intercept the light beam 3 coming from the third section 7"' of the optical path 7 and reflect the light beam 3 towards the plasmonic element 10 along the fourth section 7^{IV} of the optical path 7.

Advantageously, the third reflecting element 15 of the optical guide means 6 cooperates with the focusing means 8 in order to determine the position of the focal point P, which is advantageously positioned along the fourth section 7^{IV} of the optical path 7.

Advantageously, the incidence angle ϑ of the light beam 3 on the plasmon excitation surface 11 of the plasmonic element 10 depends on the tilt of the plasmon excitation surface 11 and of the third reflection surface of the third reflecting element 15 with respect to the direction of the third section 7"' of the optical path 7. The third reflection surface of the third reflecting element 15 is thus suitably tilted in order to obtain the pre-established incidence angle ϑ.

In accordance with a third embodiment of the optical device 1, object of the present invention, illustrated in the example of figure 9, the optical device 1 is configured for allowing the execution of the measurements of surface plasmon resonance by also using the rays transmitted through the plasmonic element 10.

More in detail, in accordance with such third embodiment, the detection means 102 can also acquire the light beam 3 transmitted beyond the plasmon excitation surface 11 of the plasmonic element 10, in addition to the light beam reflected by the plasmonic surface 11 itself.

In operation, the light beam 3, after having hit the plasmon excitation surface 11 and having generated the SPR phenomenon, is divided into two components, a reflected component and a transmitted component.

The reflected component is the component that is directed along the fifth section 7^{V} of the optical path 7 as described above with regard to the first and second embodiment of the present invention.

The transmitted component is propagated along the plasmon excitation surface 11 along a sixth section 7^{VI} of the optical path 7.

Advantageously, in the third embodiment the optical guide means 6 advantageously comprise a fourth reflection element 20, placed to connect the sixth section 7^{VI} of the optical path 7 and a seventh section 7^{VII} of the optical path 7, and such seventh section 7^{VII} is tilted with respect to the sixth section 7^{VI} and passes through the outlet zone 5 of the optical device 1 in order to project the transmitted component of the light beam 3 towards the detection means 102 of the spectrophotometer 100. This third embodiment therefore allows detecting and analyzing also the transmitted component, in addition to the reflected component.

In such third embodiment, both the reflected component of the light beam 3, which follows the fifth section 7^{V} of the optical path 7, and the transmitted component, which follows the seventh section 7^{VII} of the optical path 7, can reach the detection means 102. In order for the spectrophotometer 100 to be able to separately acquire the aforesaid two components and distinguish the information contained therein, the optical device 1 also comprises means 25 for interrupting the light beam 3.

Advantageously, the interruption means 25 can be of physical type, e.g. constituted by a chopper or a pair of shutters.

More in detail, as is known, the choppers are optical devices generally constituted by a solid rotary disc, preferably made of polymer or metallic material, at whose interior one or more through holes are made. In operation, the rotation of the disc around its center periodically interrupts the passage of the light beam 3, when the latter does not traverse the through hole.

In this first case, a single chopper is able to allow the alternated passage of the reflected component and the transmitted component of the light beam 3. By synchronizing such rotation of the disc of the chopper with the data acquisition software of the control unit of the spectrophotometer 100, it is possible to distinguish the two detected components based on the detection time instant. Or rather, based on the rotation speed of the disc and on the width of its through holes, it can be determined beforehand which time instants allow the passage (and hence the detection) of only the reflected component and which time instants allow the passage (and hence the detection) of only the transmitted component.

As already mentioned, one alternative to the choppers can be constituted for example by physical interruption means such as the shutters. As is known, the shutters are optical devices provided with a through hole, through which the light beam 3 is made to pass, and with a series of sheets positioned around the opening edge of the through hole; such sheets can be driven to close or open the through hole itself in order to block or allow the passage of the light beam 3.

In this second case, a first shutter can be positioned to intercept the fifth section 7^{V} of the optical path 7 in order to block or allow the passage of the reflected component of the light beam 3, and a second shutter can be positioned to intercept the seventh section 7^{VII} of the optical path 7 in order to block or allow the passage of the transmitted component of the light beam 3.

By alternately opening or closing the first or second shutter, it is possible to make an alternated passage of the two components of the light beam 3. Hence by synchronizing such alternated passage with the data acquisition software of the control unit of the spectrophotometer 100, it is possible to distinguish the two detected components based on the detection time instant.

Advantageously, the plasmonic element 10 of the optical device 1 according to the third embodiment has the aforesaid first configuration (grating configuration), discussed above.

In accordance with the example illustrated in figure 9, the optical device 1 according to the third embodiment advantageously comprises the optical focusing means 8, which are preferably configured in order to modify the convergence angle of the light beam 3 in a manner such to determine the position of the focal point P spaced from the plasmonic element 10 and, in particular, beyond the latter in the travel direction of the optical path 7.

Otherwise, the optical device 1 according to the third embodiment can have a variant in which the optical focusing means 8 are configured for defining the position of the focal point P at the plasmon excitation surface 11 of the plasmonic element 10 (analogous to the example of figure 5). In addition, in accordance with a further variant of the third embodiment of the present invention, the optical device 1 lacks the optical focusing means 8 (analogous to the example of figures 2 and 4).

In accordance with a preferred embodiment of the present optical device 1, the optical guide means 6 (and in particular the first, second and third reflecting element 13, 14 and 15) are fixed in a rigid manner (non-movable) to the support structure 2 in order to maintain fixed the optical characteristics of the optical device 1, and in particular to maintain fixed the incidence angle ϑ of the light beam 3 on the plasmon excitation surface 11 of the plasmonic element 10. Such preferred embodiment is particularly advantageous since the user, in order to use the optical device 1, must simply insert the latter in the housing seat 104 of the spectrophotometer 100, without having to manually set any parameter of the optical device 1 itself.

In particular, in such preferred embodiment, the incidence angle ϑ, the azimuthal angle and the polarization of the light beam 3 are pre-established parameters of the optical device 1, along with the dielectric constants of the plasmon excitation surface 11 and of the dielectric and their refraction indices. Consequently, the only parameter affecting the SPR phenomenon that is variable is the wavelength of the light beam 3. Advantageously, such wavelength is a parameter variable by means of the spectrophotometer 100, hence the adaptation of the optical device 1 to a spectrophotometer 100 allows carrying out SPR measurements in a simple manner, without having to modify the settings of the starting spectrophotometer 100 and without requiring the intervention of specialized personnel.

In accordance with a different embodiment, one or more of the optical components of the optical device 1 (optical guide means 6, optical focusing means 8, polarization means 9, plasmonic element 10) are mounted in a movable manner on the support structure 2, in a manner such to be able to vary several optical parameters of the optical device 1 which affect the SPR phenomenon, in addition to the wavelength of the light beam 3. For example, it could be possible to vary the azimuthal angle of the light beam 3 with respect to the excitation surface 11, by means of a rotary stage on which the plasmonic element 10 is mounted. Or it could be possible that the third reflecting element 15 is rotatably mounted on the support structure 2 in order to modify the incidence angle ϑ of the light beam 3 with respect to the plasmon excitation surface 11, which can be in turn be rotatably mounted on the support structure 2 in order to correctly deflect the light beam 3 towards the detection means 102.

Advantageously, the support structure 2 of the optical device 1 comprises an abutment base 16 on which the optical guide means 6, the optical focusing means 8, the polarization means 9 and the plasmonic element 10 are mounted.

Preferably, such abutment base 16 is substantially flat and horizontally positioned. Advantageously, the support structure 2, and in particular the abutment base 16, is configured in accordance with the housing seat 104 of the spectrophotometer 100, in a manner such that the inlet zone 4 is arranged at the light source 101 and the outlet zone 5 is arranged at the detection means 102.

Advantageously, the abutment base 16 of the support structure 2 is easily adaptable to any housing seat 104 of the spectrophotometers 100 on the market, in order to compensate for the small differences of volume of the different housing seats 104. Preferably, the support structure 2 comprises a containment wall 17, which is in particular fixed on the abutment base 16 and at its interior delimits a chamber 30 in which at least the optical guide means 6, the polarization means 9, and advantageously also the optical focusing means 8 are arranged.

In particular, the containment wall 17 is provided with an inlet opening 18, preferably arranged at the inlet zone 4, and positioned to intercept the optical path 7 in order to allow the entrance in the chamber 30 of the light beam 3 coming from the light source 101.

In addition, the perimeter wall 17 is provided with an outlet opening 19 arranged to intercept the optical path 7 in order to allow the exit of the light beam 3 from the chamber 30.

Advantageously, the plasmonic element 10 of the optical device 1 comprises a support portion constrained to the support structure 2, and a measurement portion, which is provided with the plasmon excitation surface 11 and is removably connected to the support portion in order to allow removing such measurement portion from the optical device so as to deposit a sample to be analyzed on the plasmon excitation surface 11. For example, with reference to the examples of figures 2, 3 and 7, the support portion of the plasmonic element 10 comprises a portion of the containment wall 17, in particular at the second opening 19 thereof, and/or a pedestal 10' in particular fixed on the external surface of the containment wall 17.

Advantageously, the support portion of the plasmonic element 10 is configured for the measurement portion with the plasmon excitation surface 11 in vertical position, in order to expose such plasmon excitation surface 11 to the light beam 3 and to allow the light beam 3 to be reflected towards the detection means 102.

Advantageously, the light guide means 6 comprise a size adjustment element (not illustrated in the enclosed figures) placed to intercept the optical path 7, preferably between the third reflection element 15 of the optical guide means 6 and the plasmonic element 10, in order to intercept the light beam 3.

Advantageously, the size adjustment element is provided with at least one passage opening adapted to be traversed by a specific portion of the light beam 3.

The passage opening of the size adjustment element allows modifying the size of the light ray that hits on the plasmon excitation surface 11 of the plasmonic element 10, in order to excite the SPR phenomenon only in a limited area of the plasmon excitation surface 11 itself, by only directing thereon a portion of the optical power of the light beam 3 generated by the light source 101 of the spectrophotometer 100.

In operation, with reference to the example of the first embodiment illustrated in figure 4, the light beam 3 generated by the light source 101 of the spectrophotometer 100 enters into the optical device 1 at the inlet zone 4 and is intercepted by the optical guide means 6 which guide the light beam 3 along the optical path 7.

In particular, the first reflection element 13 intercepts the light beam 3, reflecting it towards the second reflection element 14, which in turn reflects the light beam 3 towards the third reflection element 15, in a manner such that the light beam 3 is propagated from the first section 7' of the optical path 7 up to the fourth section 7^{IV}.

The polarization means 9, in particular arranged along the third section 7"' of the optical path 7, polarize the light beam 7, for example with Transverse Magnetic polarization TM.

The light beam 3 intercepts the third reflection element 15, which reflects it along the fourth section 7^{IV} of the optical path 7 in a manner such that the light beam 3 hits the plasmonic element 10.

The light beam 3 therefore determines the excitation of the plasmon polaritons at the plasmon excitation surface 11 of the plasmonic element 10, in particular in accordance with that discussed above relative to the first configuration (grating configuration) and to the second configuration (Kretschmann configuration).

The light beam 3 is then reflected by the plasmon excitation surface 11 of the plasmonic element 10 along the fifth section 7^{V} of the optical path 7 towards the outlet zone 5 of the optical device 1, in a manner such that at least one part of the light beam 3 hits the optical sensor of the detection means 102 of the spectrophotometer 100.

With reference to the examples of the second embodiment illustrated in figures 5, 6 and 8, the lens 12 of the optical focusing means 8 (advantageously arranged in the third section 7"' of the optical path 7) focuses the light beam 3 with a convergence angle such that the light beam 3, subsequently reflected by the third reflection element 15 and by the plasmon excitation surface 11, entirely falls within the sensitive surface of the optical sensor of the detection means 102.

More in detail, in accordance with the examples of figures 5 and 8, the optical focusing means 8 focus the light beam 3 with a convergence angle such that the light beam 3, after having been reflected by the third reflection element 15, has its focal point P placed at the plasmonic element 10, and preferably at its plasmon excitation surface 11. In accordance with the example of figure 6, the optical focusing means 8 focus the light beam 3 with a convergence angle such that the light beam 3, after having been reflected by the third reflection element 15, has its focal point P placed along the fourth section 7^{IV} of the optical path 7 before the plasmonic element 10.

In accordance with the example of the third embodiment of the optical device 1, object of the present invention, illustrated in figure 9, the light beam 3, when it hits the plasmon excitation surface 11 of the plasmonic element 10, is in part reflected by and in part transmitted beyond the plasmon excitation surface 11 itself.

More in detail, the reflected component of the light beam 3 is propagated along the fifth section 7^{V} of the optical path 7 towards the outlet zone 5 of the optical device 1 up to the optical sensor of the detection means 102 of the spectrophotometer 100.

The transmitted component of the light beam 3 is propagated along the sixth section 7^{VI} of the optical path 7 towards the fourth reflection element 20.

The fourth reflection element 20 intercepts the light beam 3, reflecting it towards the outlet zone 5 of the optical device 1 along the seventh section 7^{VII} of the optical path 7, in a manner such that such light beam 3 hits optical sensor of the detection means 102 of the spectrophotometer 100.

The interruption means 25 are suitably driven in order to selectively allow the passage of only one of the two components, reflected or transmitted, of the light beam 3. More in detail, the interruption means 25 can allow the continuative passage of only one of the two components, blocking the fifth section 7^{V} or the seventh section 7^{VII} of the optical path 7 in a permanent manner. Alternatively, the interruption means 25 can advantageously allow the alternating passage of the two components of the light beam 3. For example, they can allow the passage of only the reflected component, blocking the passage of the transmitted component in the even time instants, and, vice versa, allow the passage of only the transmitted component, blocking the passage of the reflected component in the odd time instants.

In this case, the detection means 102 of the spectrophotometer 100 detect both components of the light beam 3 and the data acquisition software of the control unit automatically separates the two components based on the detection time instant.

The optical device 1, object of the present invention, therefore attains the pre-established objects.

## Claims

1. Optical device (1) for adapting a spectrophotometer for the execution of measurements of surface plasmon resonance, and such device (1) is **characterized in that** it comprises:
- a support structure (2) intended to be fixed to a spectrophotometer (100) provided with:
- a light source (101) adapted to generate a light beam (3),
- detection means (102) adapted to detect said light beam (3);
- an inlet zone (4), at which said optical device (1) is adapted to receive said light beam (3);
- an outlet zone (5), at which said optical device (1) is adapted to project said light beam (3) towards said detection means (102);
- optical guide means (6), which are mounted on said support structure (2) and define an optical path (7) between said inlet zone (4) and said outlet zone (5); said optical guide means (6) being adapted to intercept said light beam (3) and to guide said light beam (3) along said optical path (7);
- polarization means (9) mounted on said support structure (2), placed to intercept said optical path (7) and adapted to intercept said light beam (3) in order to polarize said light beam (3) according at least one polarization component;
- a plasmonic element (10) mounted on said support structure (2), arranged between said outlet zone (5) and said polarization means (9), and provided with at least one plasmon excitation surface (11) intended to be hit by said light beam (3) and adapted to project said light beam (3) along said optical path (7) in order to direct said light beam (3) towards said outlet zone (5).

2. Optical device (1) according to claim 1, **characterized in that** it comprises optical focusing means (8), which are mounted on said support structure (2), are placed to intercept said optical path (7), and are adapted to intercept said light beam (3) in order to reduce the width of the aperture angle of said light beam (3).

3. Optical device (1) according to claim 2, **characterized in that** said optical focusing means (8) comprise at least one positive lens (12).

4. Optical device according to any one of the preceding claims, **characterized in that** said optical path (7) comprises multiple sections in succession, positioned tilted one with respect to the next.

5. Optical device (1) according to claim 4, **characterized in that** said optical guide means (6) comprise at least one reflection element (13, 14, 15) placed to join two successive sections of said optical path (7) that are tilted with respect to each other.

6. Optical device (1) according to claim 5, **characterized in that** said optical guide means (6) comprise a first reflection element (13) placed to connect between a first section (7') of said optical path (7), such first section (7') passing through said inlet zone (4), and a second section (7") that is tilted with respect to said first section (7').

7. Optical device (1) according to claim 6, **characterized in that** said optical guide means (6) comprise a second reflection element (14) placed to connect between said second section (7") and a third section (7"') of said optical path (7), such third section (7"') intercepting said polarization means (9).

8. Optical device according to claim 7, **characterized in that** said optical guide means (6) comprise a third reflection element (15), positioned between said polarization means (9) and said plasmonic element (10), placed to connect between said third section (7"') and a fourth section (7^{IV}) of said optical path (7), and such fourth section (7^{IV}) is intercepted by said plasmonic element (10).

9. Optical device according to any one of the preceding claims, **characterized in that** said inlet zone (4), said outlet zone (5) and said plasmonic element (10) are aligned with each other.

10. Optical device according to any one of the preceding claims, **characterized in that** said support structure (2) comprises an abutment base (16) on which said optical guide means (6), said polarization means (9) and said plasmonic element (10) are mounted.

11. Optical device according to claim 10, **characterized in that** said support structure (2) comprises a containment wall (17), which at its interior delimits a chamber (30) in which at least said optical guide means (6) and said polarization means (9) are arranged; said containment wall (17) being provided at least with an inlet opening (18), positioned to intercept said optical path (7) in order to allow the entrance of said light beam (3) in said chamber (30), and with an outlet opening (19), arranged to intercept optical path (7) in order to allow the exit of said light beam (3) from said chamber (30).
